# EUROPEAN PATENT APPLICATION

(11) **EP 4 753 052 A1**
(43) Date of publication of application: **03.06.2026**
(21) Application number: 24844558.7
(22) Date of filing: 28.06.2024
(51) Int. Cl.: H01M 50/298

(54) **BATTERY PACK AND AUTOMOBILE**

(30) Priority: 26.07.2023 CN 202321995141 U
(71) Applicant: BYD Company Limited, Shenzhen, Guangdong 518118 (CN)
(72) Inventor: ZHANG, Yaosheng, Shenzhen, Guangdong 518118 (CN); ZHU, Liequn, Shenzhen, Guangdong 518118 (CN); HU, Shichao, Shenzhen, Guangdong 518118 (CN); WANG, Huanhuan, Shenzhen, Guangdong 518118 (CN); LAI, Qing, Shenzhen, Guangdong 518118 (CN)
(74) Representative: Taor, Simon Edward William
(86) International application number: PCT/CN2024/102577
(87) International publication number: WO 2025/020864

(57) **Abstract**

A battery pack (100) and an automobile. The battery pack (100) comprises: a battery tray (10) and a battery wire harness (20). the battery tray (10) is provided with structural beams (11), the structural beams (11) being provided with accommodating ducts(105); the battery wire harness (20) is accommodated in the accommodating ducts (105) and is insulated from the structural beams (11).

## Description

### CROSS-REFERENCE TO RELATED APPLICATION

This application is based on Chinese Patent Application No. 202321995141.2, filed on July 26, 2023, and claims priority to the Chinese Patent Application, which is incorporated herein by reference in its entirety.

### TECHNICAL FIELD

This application relates to the field of automobile technologies, and specifically, to a battery pack and an automobile.

### BACKGROUND

Battery wiring harnesses are arranged in a battery pack and usually include a high-voltage busbar and a low-voltage wiring harness, which are respectively used for functions such as current combining and sampling of battery modules in the battery pack. Routing of these battery wiring harnesses is disordered, and when thermal runaway occurs in the battery module, the whole battery wiring harness is adversely affected, affecting monitoring of operation of the battery module.

### SUMMARY

One objective of this application is to provide a new technical solution for a battery pack and an automobile, to reduce adverse effect on a battery wiring harnesses upon thermal runaway of a battery module.

According to a first aspect, this application provides a battery pack, including a battery tray and a battery wiring harness. The battery tray has a structural beam, the structural beam has an accommodating groove, and the battery wiring harness is accommodated in the accommodating groove and insulated from the structural beam.

In this application, the battery pack further includes an accommodating member. The battery wiring harness is accommodated in the accommodating member, and the accommodating member is accommodated in the accommodating groove. The accommodating member is a groove-shaped member, and an opening side of the accommodating member and an opening side of the accommodating groove face a same direction.

In this application, the battery wiring harness includes a high-voltage busbar, the accommodating member includes a busbar accommodating member, the high-voltage busbar is accommodated in the busbar accommodating member, and the busbar accommodating member is accommodated in the accommodating groove.

In this application, the battery wiring harness includes a low-voltage wiring harness, the accommodating member includes a low-voltage line accommodating member, a sampling bus is accommodated in the low-voltage line accommodating member, and the low-voltage line accommodating member is accommodated in the accommodating groove.

In this application, the low-voltage wiring harness includes the sampling bus, the sampling bus includes a plurality of sampling lines and an insulating layer, and the plurality of sampling lines are wrapped together by the insulating layer.

In this application, the battery wiring harness includes the high-voltage busbar and the low-voltage wiring harness. The battery pack further includes the busbar accommodating member and the low-voltage line accommodating member. The high-voltage busbar is accommodated in the busbar accommodating member, the low-voltage wiring harness is accommodated in the low-voltage line accommodating member, and both the busbar accommodating member and the low-voltage line accommodating member are accommodated in the accommodating groove. Both the busbar accommodating member and the low-voltage line accommodating member are groove-shaped members. An opening side of the busbar accommodating member, an opening side of the low-voltage line accommodating member, and the opening side of the accommodating groove face a same direction. A bottom wall of the low-voltage line accommodating member closes the opening side of the busbar accommodating member.

In this application, the structural beam has a reinforcing rib. The reinforcing rib supports the busbar accommodating member, so that there is an interval space between the busbar accommodating member and a bottom of the structural beam.

In this application, the sampling bus has a plurality of sampling connectors, the low-voltage line accommodating member has a plurality of first bayonets, and the first bayonet is clamped to the sampling line, so that the sampling connector is located outside the low-voltage line accommodating member.

In this application, the battery pack further includes a battery module, and the sampling connector includes a sampling nickel sheet and a quick-plug connector. The sampling nickel sheet is connected to a connecting sheet of the battery module, and the quick-plug connector is plugged into a sampling adapter wiring harness plug of the battery module.

In this application, the accommodating groove is provided with a second bayonet, and the second bayonet overlaps the first bayonet.

In this application, the structural beam includes a tray longitudinal beam and a tray cross beam. The tray longitudinal beam or the tray cross beam has the accommodating groove, and the tray longitudinal beam is connected to the tray cross beam. A longitudinal distance or a lateral distance from at least one second bayonet to a junction between the tray longitudinal beam and the tray cross beam is less than a first threshold.

According to a second aspect, this application further provides an automobile, and the automobile is installed with the battery pack as described above.

The beneficial effects of this application are as follows: The battery wiring harness is accommodated in the accommodating groove of the structural beam, so that the battery wiring harness is at least partially isolated from the battery module in the battery accommodating space, thereby reducing adverse effect on the whole battery wiring harness upon thermal runaway of the battery module.

According to the following detailed description of example embodiments of this application with reference to the accompanying drawings, other features and advantages of this application become clear.

### BRIEF DESCRIPTION OF DRAWINGS

The accompanying drawings, which are incorporated in and form a part of the specification, illustrate embodiments of this application and together with the description thereof, serve to explain the principles of this application.
FIG. 1 is an exploded view of a battery pack according to an embodiment of this application;
FIG. 2 is a three-dimensional diagram of a sampling bus according to an embodiment of this application;
FIG. 3 is a three-dimensional diagram of a low-voltage line accommodating member according to an embodiment of this application;
FIG. 4 is a partial enlarged view of a battery pack according to an embodiment of this application;
FIG. 5 is a partial enlarged view of another position of a battery pack according to an embodiment of this application;
FIG. 6 is a schematic diagram of a structure of a battery wiring harness installed in a structural beam according to an embodiment of this application; and
FIG. 7 is a schematic diagram of a position relationship between a second bayonet, a tray cross beam, and a tray longitudinal beam according to an embodiment of this application.

Reference numerals:
battery pack 100; battery tray 10; structural beam 11; battery wiring harness 20; accommodating member 30; lateral side beam 101; longitudinal side beam 102; battery accommodating space 103; tray longitudinal beam 104; reinforcing rib 1041; bottom 1042; accommodating groove 105; high-voltage busbar 106; busbar accommodating member 107; low-voltage wiring harness 108; sampling line 1081; sampling nickel sheet 1082; quick-plug connector 1083; sampling bus 1084; insulating layer 1085; sampling connector 1086; low-voltage line accommodating member 109; first bayonet 1091; tray cross beam 110; front distribution box 111; rear distribution box 112; battery module 113; connecting sheet 1131; sampling adapter wiring harness plug 1132; second bayonet 114.

### DESCRIPTION OF EMBODIMENTS

Various example embodiments of this application are described in detail with reference to the accompanying drawings. It should be noted that relative arrangement of components and steps, numerical expressions and values set forth in these embodiments do not limit the scope of this application, unless specifically noted otherwise.

The following description of at least one example embodiment is merely illustrative in nature and is not intended to limit this application, usage or application thereof.

Technologies, methods, and devices are known to a person of ordinary skill in the relevant art may not be discussed in detail. In proper cases, the technologies, methods, and devices shall be considered as a part of the specification.

In all examples shown and discussed herein, any specific value shall be interpreted as merely an example and not as limiting. Therefore, another example of the example embodiment may have a different value.

It should be noted that similar reference numerals and letters in the following accompanying drawings indicate similar items. Therefore, once an item is defined in an accompanying drawing, the item does not need to be further discussed in the following accompanying drawings.

In the following description, a "longitudinal" direction represents a length direction of an automobile, and a "lateral" direction represents a width direction of the automobile.

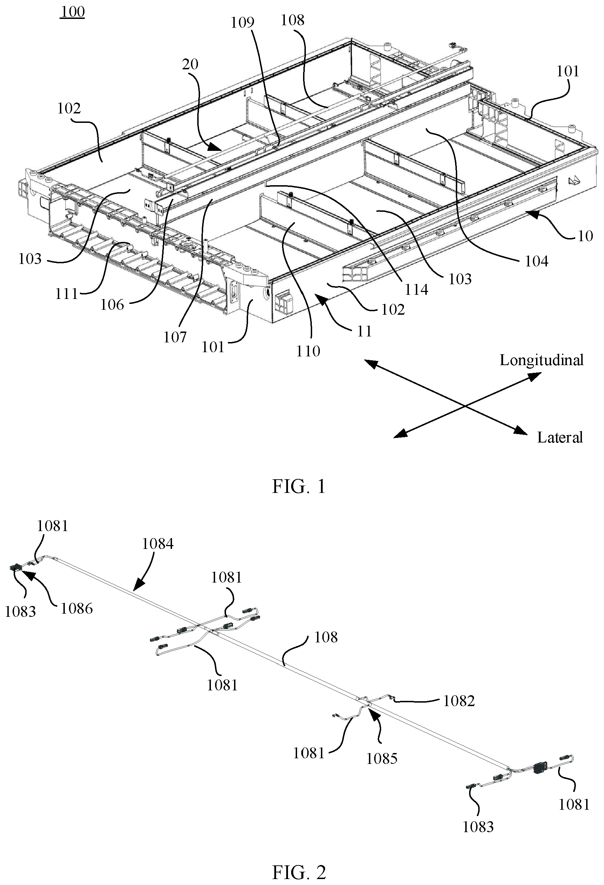

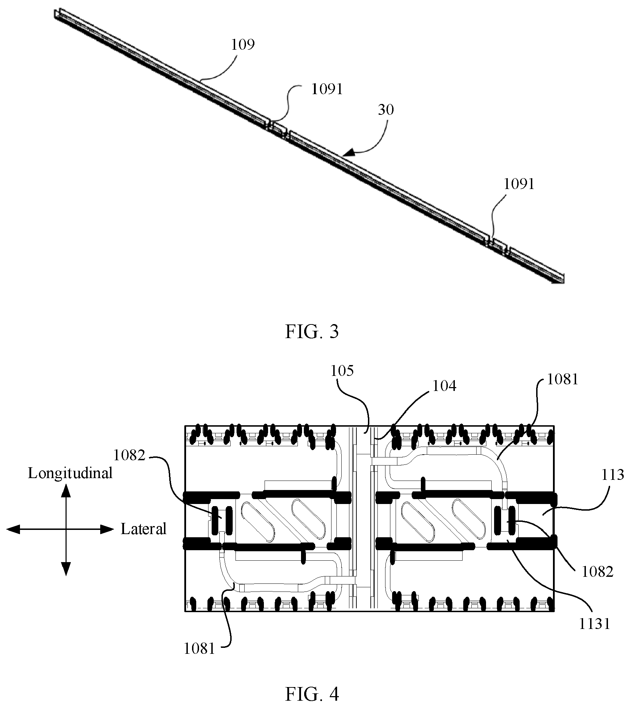

Refer to FIG. 1 and FIG. 4. An embodiment of this application provides a battery pack 100, including a battery tray 10 and a battery wiring harness 20. The battery tray 10 has a battery accommodating space 103 for accommodating a battery module. The battery tray 10 has a structural beam 11, and the structural beam 11 includes a tray longitudinal beam 104, a tray cross beam 110, a lateral side beam 101 and a longitudinal side beam 102. In the following description, the tray longitudinal beam 104 is described as an example of the structural beam 11, but other beam members such as the tray cross beam 110, the lateral side beam 101, and the longitudinal side beam 102 may have a same structure as the tray longitudinal beam 104, for example, having an accommodating groove 105. The battery wiring harness 20 may be installed in the beam members in a same manner. The tray longitudinal beam 104 has the accommodating groove 105, and the battery wiring harness 20 is accommodated in the accommodating groove 105 and insulated from the tray longitudinal beam 104. In FIG. 1, the battery tray 10 includes a pair of lateral side beams 101 and a pair of longitudinal side beams 102. The lateral side beam 101 and the longitudinal side beam 102 are connected together to form a frame structure. However, in this application, a structure of the battery tray 10 may alternatively be integrally cast, or integrally stamped. The battery wiring harness 20 is accommodated in the accommodating groove 105 of the tray longitudinal beam 104 and is insulated from the tray longitudinal beam 104. Therefore, a large part of the battery wiring harness 20 can be protected by the structural beam 11, and when thermal runaway occurs in the battery module in the battery accommodating space 103, adverse effect on the battery wiring harness 20 is reduced. Similarly, the battery wiring harness 20 is accommodated in the accommodating groove 105 of another structural beam 11 such as the tray cross beam 110, and the adverse effect on the battery module upon thermal runaway of the battery module can also be reduced.

The battery wiring harness 20 may be directly accommodated in the accommodating groove 105, or may first be accommodated in an accommodating member 30 (for example, a busbar accommodating member 107 or a low-voltage line accommodating member 109 described below), and then the accommodating member 30 may be accommodated in the accommodating groove 105. The accommodating member 30 may use a groove-shaped member, and an opening side of the accommodating member 30 and an opening side of the accommodating groove face a same direction.

According to an embodiment of this application, the battery wiring harness 20 includes a high-voltage busbar 106, and the accommodating member 30 includes a busbar accommodating member 107. The high-voltage busbar 106 includes conductors such as copper and aluminum, and is configured to perform high-voltage electrical connection with the battery module, for example, current combining of battery modules. The conductors such as copper and aluminum in the high-voltage busbar 106 may be coated with an insulating film. The busbar accommodating member 107 is preferably made of an insulating material. The busbar accommodating member 107 may alternatively be made of a non-insulating material when the high-voltage busbar 106 includes an insulating layer 1085. The high-voltage busbar 106 is accommodated in the busbar accommodating member 107, and then the busbar accommodating member 107 is accommodated in the accommodating groove 105, so that electrical insulation is implemented between the high-voltage busbar 106 and the structural beam 11, and the high-voltage busbar 106 is protected by both the busbar accommodating member 107 and the structural beam 11, further reducing the adverse effect of thermal runaway.

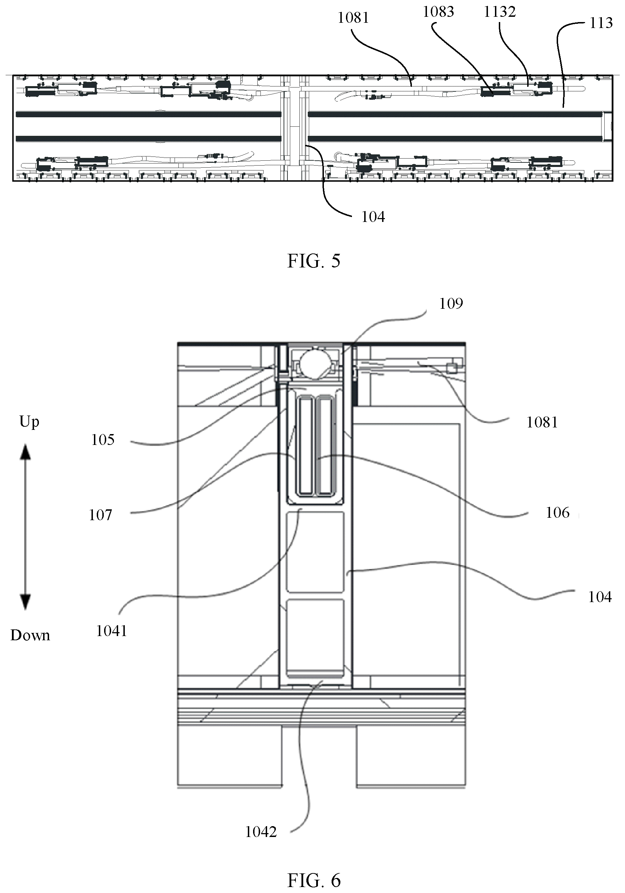

The busbar accommodating member 107 may be a groove-shaped member or a tubular member. Preferably, the busbar accommodating member 107 is a groove-shaped member. A "groove"-shaped structure definitely has four side surfaces: two opposite side walls, a bottom wall, and an opening side. Whether two ends of the "groove"-shaped structure are open is not limited in this application. It can be learned from FIG. 6 that an opening side of the busbar accommodating member 107 and an opening side of the accommodating groove 105 of the tray longitudinal beam 104 face a same direction. That is, both the two opening sides face upward as shown in FIG. 6. An advantage of this structure is that, when the battery pack is assembled, the busbar accommodating member 107 may be first installed into the accommodating groove 105 through the opening side of the accommodating groove 105, and then the high-voltage busbar 106 may be installed into the busbar accommodating member 107 through the opening side of the busbar accommodating member 107, thereby facilitating assembly.

According to an embodiment of this application, with reference to FIG. 2, the battery wiring harness 20 includes a low-voltage wiring harness 108, and the low-voltage wiring harness 108 includes a sampling bus 1084. The sampling bus 1084 includes a plurality of sampling lines 1081 and an insulating layer 1085, and the plurality of sampling lines 1081 are wrapped together by the insulating layer 1085. The low-voltage wiring harness may further include another signal line. In this specification, wrap does not represent a complete wrap, but rather allows each sampling connector 1086 of each sampling line 1081 to be connected to an apparatus other than the sampling bus 1084. Routing confusion can be avoided in this structure of the sampling bus 1084.

According to an embodiment of this application, with reference to FIG. 3, the accommodating member 30 includes a low-voltage line accommodating member 109. The sampling bus 1084 is accommodated in the low-voltage line accommodating member 109, the low-voltage line accommodating member 109 is accommodated in the accommodating groove 105, so that the low-voltage wiring harness can be protected by both the tray longitudinal beam 104 and the low-voltage line accommodating member 109, further reducing the adverse effect of thermal runaway. The sampling bus 1084 can be electrically insulated from the tray longitudinal beam 104 by using the insulating layer 1085 of the sampling bus 1084. The low-voltage line accommodating member 109 may be made of an insulating material or a non-insulating material.

Similar to the busbar accommodating member 107, the low-voltage line accommodating member 109 may be either a groove-shaped member or a tubular member. Preferably, the low-voltage line accommodating member 109 is a groove-shaped member. It can be learned from FIG. 6 that an opening side of the low-voltage line accommodating member 109 and the opening side of the accommodating groove 105 of the tray longitudinal beam 104 face a same direction. That is, both the two opening sides face upward as shown in FIG. 6. An advantage of this structure is that, when the battery pack is assembled, the low-voltage line accommodating member 109 may be first installed into the accommodating groove 105 through the opening side of the accommodating groove 105, and then the low-voltage wiring harness, such as the sampling bus 1084, may be installed into the busbar accommodating member 107 through the opening side of the low-voltage line accommodating member 109, thereby facilitating assembly.

According to an embodiment of this application, it can be learned from FIG. 6 that, as an optional solution, the battery wiring harness 20 includes both the high-voltage busbar 106 and the low-voltage wiring harness (for example, the sampling bus 1084). Accordingly, the accommodating member 30 includes the busbar accommodating member 107 and the low-voltage line accommodating member 109. Both the busbar accommodating member 107 and the low-voltage line accommodating member 109 are accommodated in the accommodating groove 105 of the tray longitudinal beam 104. Both the busbar accommodating member 107 and the low-voltage line accommodating member 109 are groove-shaped members, and the opening side of the busbar accommodating member 107, the opening side of the low-voltage line accommodating member 109, and the opening side of the accommodating groove 105 of the tray longitudinal beam 104 face a same direction. That is, all the three opening sides face upward as shown in FIG. 6, and a bottom wall of the low-voltage line accommodating member 109 closes the opening side of the busbar accommodating member 107. An advantage of this structure is that, from an assembly perspective, the busbar accommodating member 107 may be first installed into the accommodating groove 105 through the opening side of the accommodating groove 105, then the high-voltage busbar 106 may be installed into the busbar accommodating member 107 through the opening side of the busbar accommodating member 107, then the low-voltage line accommodating member 109 may be installed into the accommodating groove 105 through the opening side of the accommodating groove 105, and finally the low-voltage wiring harness, such as the sampling bus 1084, may be installed into the busbar accommodating member 107 through the opening side of the low-voltage line accommodating member 109. All assembly operations are performed from top to bottom, thereby facilitating assembly. From a perspective of wiring harness protection, in this structure, the bottom wall of the low-voltage line accommodating member 109 is used to close the opening side of the busbar accommodating member 107. Therefore, the high-voltage busbar 106, which is sensitive to a thermal runaway risk, is provided with enhanced protection. Protection effect of the whole structure for high and low-voltage wiring harnesses is more reasonable.

According to an embodiment of this application, it can also be learned from FIG. 6 that the tray longitudinal beam 104 has a reinforcing rib 1041. The reinforcing rib 1041 serves as a structural reinforcement to the tray longitudinal beam 104, and further supports the busbar accommodating member 107, so that there is an interval space between the busbar accommodating member 107 and the bottom 1042 of the tray longitudinal beam 104. This prevents the high-voltage busbar 106 and the low-voltage wiring harness from falling too deep into the accommodating groove 105, causing excessive bending of the battery wiring harness 20.

According to an embodiment of this application, it can be learned from FIG. 2 that the sampling bus 1084 has a plurality of sampling connectors 1086, and the sampling connectors 1086 include a sampling nickel sheet 1082 and a quick-plug connector 1083. It can be learned from FIG. 3 that the low-voltage line accommodating member 109 has a plurality of first bayonet 1091. The sampling connector 1086, including the sampling nickel sheet 1082 and the quick-plug connector 1083, protrudes from the opening side 1091. Therefore, each sampling line 1081 is clamped with the first bayonet 1091, so that the sampling connector 1086 is located outside the low-voltage line accommodating member 109. The first bayonet 1091 may be sealed by using sealant.

Both the low-voltage line accommodating member 109 and the busbar accommodating member 107 may be formed by extrusion of a composite material, and the manufacturing is simple. Alternatively, both the low-voltage line accommodating member 109 and the busbar accommodating member 107 may be formed by bending or stamping of a plate.

The tray longitudinal beam 104 or another structural beam 11 may be formed by extrusion or by bending of a plate, or may be manufactured by die casting, or the like. The opening side of the accommodating groove 105 is provided at the top of the structural beam 11, that is, the opening side of the accommodating groove 105 faces upward, to facilitate arrangement of the battery wiring harness 20.

It can be learned from FIG. 1 that the battery tray 10 further includes a tray cross beam 110. The tray longitudinal beam 104 intersects the tray cross beam 110, thereby dividing the battery tray 10 into a plurality of battery accommodating spaces 103. The tray longitudinal beam 104 and the tray cross beam 103 can jointly improve structural strength of the battery tray 10. As described above, the accommodating groove 105 may also be provided in the tray cross beam 110 for accommodating the battery wiring harness 20. With reference to FIG. 1 and FIG. 6, the accommodating groove 105 has a second bayonet 114, and the second bayonet 114 overlaps the first bayonet 1091. Therefore, each sampling connector of the sampling line 1081 can smoothly reach, through the first bayonet 1091 and the second bayonet 114, a position at which sampling needs to be performed.

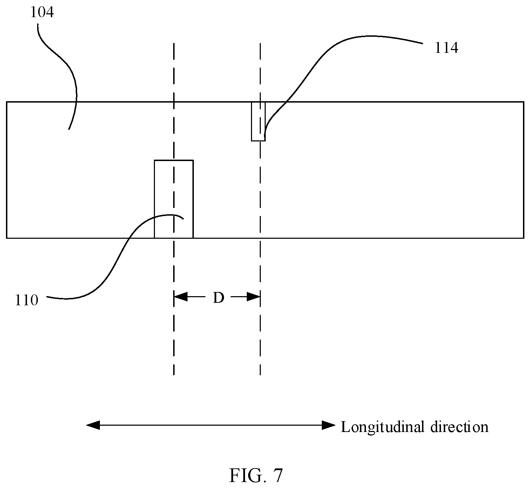

According to an embodiment of this application, with reference to FIG. 7, a longitudinal distance D from at least one second bayonet 114 to a junction between the tray longitudinal beam 104 and the tray cross beam 110 is less than a first threshold. The first threshold may be 2 cm, 3 cm, or another suitable value, and may be selected depending on lengths of the tray longitudinal beam 104, and the tray cross beam 110. In other words, the second bayonet 114 is adjacent to the junction between the tray longitudinal beam 104 and the tray cross beam 110, and the junction has higher structural strength, so that a connection between the sampling line 1081 and the sampling connector 1086 can be highly protected, making the sampling line 1081 less prone to being crushed or broken. In the embodiment shown in FIG. 7, the second bayonet 114 is provided in the tray longitudinal beam 104, so that D is a longitudinal distance. If the second bayonet 114 is provided in the tray cross beam 110, the distance D is a lateral distance.

It can be learned more clearly from FIG. 4 that the battery module 113 is installed in the battery accommodating space 103, and the sampling nickel sheet 1082 is connected to a connecting sheet 1131 of the battery module 113.

It can be learned more clearly from FIG. 5 that the battery module 113 is installed in the battery accommodating space 103, and the quick-plug connector 1083 of the sampling bus 1084 is plugged into a sampling adapter wiring harness plug 1132 of the battery module 113.

Refer to FIG. 1. One lateral side beam 101 is provided with a front distribution box 111, and another lateral side beam 101 is provided with a rear distribution box 112. The sampling connector 1086 includes the quick-plug connector 1083, the quick-plug connector 1083 is plugged into a low-voltage plug (not shown) of the front distribution box 111 or the rear distribution box 112.

Optionally, the accommodating groove 105 penetrates through the tray longitudinal beam 104 in a longitudinal direction, so that the sampling bus 1084 can be protected by the tray longitudinal beam 104 until the quick-plug connector 1083 of the sampling line 1081 extends into the front distribution box 111 or the rear distribution box 112.

This application further provides an automobile, and the automobile is installed with the battery pack as described above. Therefore, the automobile has higher safety.

Although some specific embodiments of this application have been described in detail by using examples, a person skilled in the art should understand that the foregoing examples are merely for description, but are not intended to limit the scope of this application. A person skilled in the art should understand that modifications may be made to the foregoing embodiments without departing from the scope and spirit of this application. The scope of this application is defined by the appended claims.

## Claims

1. A battery pack (100), comprising:
a battery tray (10) and a battery wiring harness (20), wherein
the battery tray (10) has a structural beam (11), the structural beam (11) has an accommodating groove (105), and the battery wiring harness (20) is accommodated in the accommodating groove (105) and insulated from the structural beam (11).

2. The battery pack (100) according to claim 1, further comprising an accommodating member (30), and the battery wiring harness (20) is accommodated in the accommodating member (30), and the accommodating member (30) is accommodated in the accommodating groove (105).

3. The battery pack (100) according to claim 2, wherein the accommodating member (30) is a groove-shaped member, and an opening side of the accommodating member (30) and an opening side of the accommodating groove (105) face a same direction.

4. The battery pack (100) according to claim 2 or 3, wherein the battery wiring harness (20) comprises a high-voltage busbar (106), the accommodating member (30) comprises a busbar accommodating member (107), the high-voltage busbar (106) is accommodated in the busbar accommodating member (107), and the busbar accommodating member (107) is accommodated in the accommodating groove (105).

5. The battery pack (100) according to claim 2 or 3, wherein the battery wiring harness (20) comprises a low-voltage wiring harness (108), the accommodating member (30) comprises a low-voltage line accommodating member (109), the low-voltage wiring harness (108) is accommodated in the low-voltage line accommodating member (109), and the low-voltage line accommodating member (109) is accommodated in the accommodating groove (105).

6. The battery pack (100) according to claim 5, wherein the low-voltage wiring harness (108) comprises a sampling bus (1084), the sampling bus (1084) comprises a plurality of sampling lines (1081) and an insulating layer (1085), and the plurality of sampling lines (1081) are wrapped together by the insulating layer (1085).

7. The battery pack (100) according to any one of claims 1 to 6, wherein the battery wiring harness (20) comprises the high-voltage busbar (106) and the low-voltage wiring harness (108), the battery pack (100) further comprises the busbar accommodating member (107) and the low-voltage line accommodating member (109), the high-voltage busbar (106) is accommodated in the busbar accommodating member (107), the low-voltage wiring harness (108) is accommodated in the low-voltage line accommodating member (109), and both the busbar accommodating member (107) and the low-voltage line accommodating member (109) are accommodated in the accommodating groove (105).

8. The battery pack (100) according to claim 7, wherein both the busbar accommodating member (107) and the low-voltage line accommodating member (109) are groove-shaped members, an opening side of the busbar accommodating member (107), an opening side of the low-voltage line accommodating member (109) and the opening side of the accommodating groove (105) face a same direction, and a bottom wall of the low-voltage line accommodating member (109) closes the opening side of the busbar accommodating member (107).

9. The battery pack (100) according to claim 8, wherein the structural beam (11) has a reinforcing rib (1041), and the reinforcing rib (1041) supports the busbar accommodating member (107), so that there is an interval space between the busbar accommodating member (107) and a bottom (1042) of the structural beam (11).

10. The battery pack (100) according to claim 6, wherein the sampling bus (1084) has a plurality of sampling connectors (1086), the low-voltage line accommodating member (109) has a plurality of first bayonets (1091), and the first bayonet (1091) is clamped to the sampling line (1081), so that the sampling connector (1086) is located outside the low-voltage line accommodating member (109).

11. The battery pack (100) according to claim 10, wherein the battery pack (100) further comprises a battery module (113), the sampling connector (1086) comprises a sampling nickel sheet (1082) and a quick-plug connector (1083), the sampling nickel sheet (1082) is connected to a connecting sheet (1131) of the battery module (113), and the quick-plug connector (1083) is plugged into a sampling adapter wiring harness plug (1132) of the battery module (113).

12. The battery pack (100) according to claim 10, wherein the accommodating groove (105) is provided with a second bayonet (114), and the second bayonet (114) overlaps the first bayonet (1091).

13. The battery pack (100) according to claim 12, wherein the structural beam (11) comprises a tray longitudinal beam (104) and a tray cross beam (110), the tray longitudinal beam (104) or the tray cross beam (110) has the accommodating groove (105), the tray longitudinal beam (104) is connected to the tray cross beam (110), and a longitudinal distance or a lateral distance from at least one second bayonet (114) to a junction between the tray longitudinal beam (104) and the tray cross beam (110) is less than a first threshold.

14. An automobile, wherein the automobile is installed with the battery pack (100) according to any one of claims 1 to 13.
